# NEUE EUROPÄISCHE PATENTSCHRIFT

(11) **EP 3 045 551 B2**
(45) Veröffentlichungstag und Bekanntmachung des Hinweises auf die Entscheidung über den Einspruch: **17.12.2025**
(45) Hinweis auf die Patenterteilung: 11.05.2022
(21) Anmeldenummer: 16158989.0
(22) Anmeldetag: 18.11.2010
(51) Int. Cl.: C21D 9/00, C21D 1/30, C21D 9/50, B62D 25/14, B62D 21/15, B60R 19/02, B21D 53/88, C21D 8/00, C21D 1/673, C21D 1/09

(54) **VERFAHREN ZUM PARTIELLEN WÄRMEBEHANDELN EINER WARMGEFORMTEN UND PRESSGEHÄRTETEN KRAFTFAHRZEUGKOMPONENTE**
MOTOR VEHICLE COMPONENT AND BODY COMPONENT
COMPOSANTS DE VEHICULE AUTOMOBILE ET COMPOSANT DE CARROSSERIE

(30) Priorität: 25.03.2010 DE 102010012830
(43) Veröffentlichungstag der Anmeldung: 20.07.2016
(62) Teilanmeldung aus: 10014733.9
(73) Patentinhaber: Benteler Automobiltechnik GmbH, 33102 Paderborn (DE)
(72) Erfinder: Pellmann, Markus, 48336 Sassenberg (DE); Pohl, Martin, 33184 Altenbeken (DE); Schroeter, Martin, 33102 Paderborn (DE); Buschsieweke, Otto, 33102 Paderborn (DE); Handing, Christian, 33449 Langenberg (DE); Adelbert, Stefan, 33129 Delbrück (DE)
(74) Vertreter: Griepenstroh, Jörg

(56) Entgegenhaltungen:
- EP-A1- 2 143 621
- WO-A1-2009/135776
- WO-A1-2010/112140
- WO-A2-2008/048307
- DE-A1- 102004 023 579
- DE-A1- 102008 044 523
- DE-A1- 19 743 802
- DE-B3- 102008 021 492
- US-A- 5 972 134
- US-A1- 2002 069 506
- NAGANATHAN, PENTER: "Chapter 7. Hot Stamping", SHEET METAL FORMING&MDASH;PROCESSES AND APPLICATIONS, ASM INTERNATIONAL, 1 January 2012 (2012-01-01), pages 133 - 156, XP055047590, Retrieved from the Internet <URL:http://www.asminternational.org/content/ASM/StoreFiles/05350G_Sample.pdf> [retrieved on 20121212]
- M. BLAIR ET AL., STEEL CASTINGS HANDBOOK SIXTH EDITION, 1995, pages 24.1 - 24.5, XP093024629
- TOTTEN GEORGE E: "Steel Heat Treatment handbook. Second Edition. Excerpts", 1 January 2007, CRC PRESS, pages: 1 - 31, XP093024623
- K. MÄNTYJÄRVI ET AL.: "LOCAL LASER HEAT TREATMENTS IN MAKING TAILORED STRENGTH STEEL CONSTRUCTIONS", NORDIC CONFERENCE IN LASER PROCESSING OF MATERIALS, 2007, XP055502357
- M. HEYDE ET AL.: "Local heat treatment of ultra-high-strength steels - an opportunity to extend the range of car body components", DDRG - 50TH ANNIVERSARY CONFERENCE; TOOLS AND, XP055300189
- HEIN PHILIPP ; WILSIUS JOEL: "Status and innovation trends in hot stamping of USIBOR 1500 P", STEEL RESEARCH INTERNATIONAL., VERLAG STAHLEISEN GMBH., DUSSELDORF., DE, vol. 79, no. 2, 1 February 2008 (2008-02-01), DE , pages 85 - 91, XP009101799, ISSN: 1611-3683

## Beschreibung

Die vorliegende Erfindung betrifft ein Verfahren zur Herstellung einer Kraftfahrzeugkomponente gemäß den Merkmalen im Patentanspruch 1.

Aus der DE 10 2005 054 847 B3 sind warmgeformte und pressgehärtete Bauteile, die nach dem Endformen und dem Einstellen hochfester mechanischer Eigenschaften im Stahl einer gezielten Wärmebehandlung unterzogen werden, bekannt. Insbesondere bei Struktur- und/oder Sicherheitsbauteilen, die im Crashfall axial belastet werden, soll ein nach der vorgenannten Art hergestelltes Bauteil einerseits hochfest sein und andererseits im Crashfall Falten werfen, um Energie gezielt abzubauen.

Aus der DE 197 43 802 A1 ist ein Verfahren zum Warmumformen und Presshärten einer Kraftfahrzeugkomponente bekannt, bei der im Anschluss eine Wärmenachbehandlung durchgeführt wird, wobei das Bauteil von der Temperatur der Wärmenachbehandlung aus langsam abkühlt.

Aus der DE 10 2004 023 579 A1 ist ein Verfahren zur Herstellung eines Bauteils aus einem hochfesten Stahl bekannt. Dieses Bauteil kann ebenfalls einer Wärmenachbehandlung unterzogen werden und darf von dieser Temperatur abkühlen.

Eine Wärmebehandlung findet gemäß dem Stand der Technik üblicherweise in einem Temperaturbereich zwischen 320°C und 400°C statt und verändert die im Warmform- und Presshärteprozess eingestellten Festigkeitswerte kaum. Gleichzeitig wird jedoch die Duktilität des Werkstoffes derart erhöht, dass im Crashfall eine Faltenbildung möglich ist.

Mit den aus dem Stand der Technik bekannten Verfahren ist für viele Serienproduktionsprozesse eine hinreichend zielgenaue Einstellung der gewünschten Werkstoffkonfiguration möglich.

Aufgabe der vorliegenden Erfindung ist es daher, eine warmumgeformte und pressgehärtete Kraftfahrzeugkomponente aufzuzeigen, die ein gezieltes Werkstoffgefüge kostengünstig großserientauglich hergestellt aufweist.

Die vorliegende Aufgabe wird durch ein Verfahren mit den Merkmalen im Patentanspruch 1 gelöst.

Weitere Ausführungsformen sind Bestandteil der abhängigen Patentansprüche. Die Kraftfahrzeugkomponente ist insbesondere als Karosseriebauteil und bevorzugt als Strukturbauteil oder Sicherheitsbauteil für ein Kraftfahrzeug mittels Warmformen und Presshärten hergestellt und dadurch gekennzeichnet, dass Fügeflansche und/oder Koppelungsstellen und/oder crashrelevante Bauteilbereiche partiell in mehreren Schritten wärmebehandelt sind.

Das so hergestellte Karosseriebauteil weist insbesondere den Vorteil auf, dass es sich im Falle eines Unfalles in gewünschter Art und Weise verformen kann. Dieses bauteilspezifische definierte Verformungsverhalten kann beispielsweise durch Faltenbildung ausgebildet sein. Weiterhin sind die Fügeflansche und/oder Kopplungsstellen durch die erfindungsgemäße Wärmebehandlung eher duktil ausgebildet, so dass sie im Falle eines Unfalles eher eine Tendenz zur Verformung als eine Tendenz zum Reißen aufweisen.

Unter einem Karosseriebauteil ist im Rahmen der Erfindung eine A-Säule, B-Säule, C-Säule, D-Säule, ein Bumper, eine Crashbox, ein Längsträger vorne, ein Längsträger hinten, ein Tunnel, beispielsweise in Form eines Getriebetunnels, ein Schweller, ein Querträger, ein Sitzquerträger, ein Fersenblech, ein Dachquerträger, ein Bodenblech, eine Seitenwand, eine Fahrzeugtür, eine Heckklappe, eine Motorhaube, ein Dachbereich oder ein Instrumententräger mit verschiedenen Anbauteilen zu verstehen. Weitere Blechbauteile eines Kraftfahrzeuges können ebenfalls als Karosseriebauteil angesehen werden.

Unter einem crashrelevanten Bauteilbereich ist beispielsweise ein Anbindungsbereich einer A-, B- oder C-Säule oder ein Koppelungsbereich eines Schwellers mit einem Quer- oder Längsträger zu verstehen. Insgesamt sind crashrelevante Bauteilbereiche im Rahmen der Erfindung die Bauteilbereiche, die bei einem Fahrzeugcrash besonderen Belastungen ausgesetzt sind. Hierbei handelt es sich beispielsweise um Anbindungsbereiche, die durch Koppelung von zwei Bauteilen charakterisiert sind oder aber Übergangsbereiche, beispielsweise die Radien eines Türausschnittes in einer Fahrzeugkarosserie oder ähnliche Bereiche, an die, im Falle eines Fahrzeugcrashs, hohe Anforderungen in Bezug auf Verformung und Haltbarkeit gestellt werden.

Bei einem Längsträger, der mit dem erfindungsgemäßen Verfahren wärmebehandelt wird, können Bereiche geschaffen werden, die sich im Falle eines Fahrzeugcrashes gezielt verformen. Diese Verformung kann beispielsweise in Form eines Faltens oder aber Einfaltens erfolgen.

Das Verfahren zur Herstellung der warmumgeformten und pressgehärteten Kraftfahrzeugkomponente bestehend aus mindestens einem warmgeformten und pressgehärteten Karosseriebauteil aus hochfestem Stahl, das als Strukturbauteil und/oder Sicherheitsbauteil für ein Kraftfahrzeug eingesetzt wird, wird mit folgenden Verfahrensschritten durchgeführt:
- Partielles Wärmebehandeln der Kraftfahrzeugkomponente in Bereichen, wobei die Bereiche zunächst auf eine Aufwärmtemperatur in einem Temperaturbereich zwischen 500 °C und 900 °C, bevorzugt zwischen 550 °C und 800 °C, insbesondere zwischen 700 °C und 800 °C aufgewärmt werden;
- Halten der Aufwärmtemperatur für eine Haltezeit;
- Abkühlen von der Aufwärmtemperatur in mindestens zwei Phasen.

Ein Vorteil des erfindungsgemäßen Verfahrens ist, dass die in der Kraftfahrzeugkomponente gewünschten Werkstoffeigenschaften gezielt und prozesssicher herstellbar sind. Das mittels Warmform und Presshärten hergestellte Bauteil weist eine harte und spröde Struktur auf. Durch die partielle Wärmebehandlung mit dem erfindungsgemäßen Verfahren unterhalb der Austenitisierungstemperatur wird das Bauteil in den wärmebehandelten Bereichen in seinem Werkstoffgefüge umgewandelt, so dass hier ein tendenziell duktileres Werkstoffgefüge auftritt. Die Aufwärmung beginnt im Rahmen der Erfindung bei einer Starttemperatur, die das Bauteil nach dem Presshärteprozess aufweist. Beispielsweise kann es sich dabei um die Umgebungstemperatur handeln. Die Starttemperatur der Aufwärmung ist aber immer kleiner als die Martensit Starttemperatur (MS), vorzugsweise unterhalb von 200°C.

Durch den Temperaturbereich zwischen 500°C und 900°C für das Aufwärmen bzw. das Halten der Aufwärmtemperatur ergibt sich ein besonders vorteiliger Spannungsabbau in den gezielt wärmebehandelten Bereichen, beispielsweise an Fügeflanschen oder aber an Randstellen von Aussparungen, die einer erfindungsgemäßen Wärmebehandlung unterzogen werden.

Am Beispiel einer Kraftfahrzeugkomponente, die als Strukturbauteil oder Sicherheitsbauteil in eine selbsttragende Karosserie eingesetzt ist, wirkt sich der wärmebehandelte Bereich besonders vorteilig auf die Crasheigenschaft der Karosserie im Einsatzbereich der Kraftfahrzeugkomponente aus. Ist beispielsweise ein Bereich in Form eines Fügeflansches mit dem erfindungsgemäßen Verfahren wärmebehandelt worden, so neigt dieser Fügeflansch nicht zu einem Auf- bzw. Ausreißen oder aber zu einer Rissbildung im Falle eines Unfalles und hält somit die umliegenden Struktur- bzw. Sicherheitsbauteile zusammen. Gerade unter Berücksichtigung eines Fahrgastinnenraumes wirkt sich dies besonders vorteilig auf den Insassenschutz aus. Unter einem Fügeflansch ist im Rahmen der Erfindung ein Flanschbereich zu verstehen, der zur Anbindung eines anderen Bauteils oder einer Bauteilkomponente vorgesehen ist. Die Anbindung kann dabei durch Kleben, Nieten, Schweißen, Löten oder ähnliche Koppelungsprozesse hergestellt werden.

Ein weiterer Vorteil ergibt sich in Bereichen, die im Falle eines Unfalles einer gewollten Verformung ausgesetzt sind. Diese Verformung ist vorgesehen, um Energie zum Abbau in die Karosserie einzuleiten, so dass hier wiederum die Crashsicherheit für Fahrzeuginsassen steigt. Ein weiterer Anwendungsfall ist beispielsweise auch das gezielte Deformieren einzelner Bereiche, um eine besonders günstige Unfallreparatur zu ermöglichen.

Die mit dem erfindungsgemäßen Verfahren wärmebehandelten Bereiche können dabei im Crashfall so deformiert werden, dass eine gezielte Einfaltung und somit gezielte Energieaufnahme stattfindet. Weiterhin tendieren die wärmebehandelten Bereiche weniger zu einer Rissbildung, da ihr Gefüge gegenüber dem warmgeformten und pressgehärteten, harten und spröden Gefüge eher duktil ist.

Das erfindungsgemäße Verfahren stellt die gewünschten Werkstoffeigenschaften großserientauglich besonders prozesssicher her. Eine Fertigungsstreuung in Form von Fertigungstoleranzen kann somit weitestgehend vermieden werden, so dass beispielsweise im Anwendungsfall einer durch gezielte CAD-Berechnung konstruierten Karosserie mit besonderen Crashpunkten eine hohe Fertigungsgenauigkeit durch Einsatz von mit dem erfindungsgemäßen Verfahren hergestellten Kraftfahrzeugkomponenten sichergestellt wird.

In einer bevorzugten Ausführungsform wird die partielle Wärmebehandlung an Fügeflanschen des Bauteils durchgeführt. Hierdurch ergibt sich der Vorteil, dass die Fügeflansche eine duktile Werkstoffeigenschaft aufweisen. Im Falle einer stoffschlüssigen Verbindung mittels thermischen Fügens findet hier eine Gefügeumwandlung in der Wärmeeinflusszone des Fügeverfahrens statt. Ein duktiler Abschnitt des Bauteils wirkt sich hierbei besonders vorteilig auf den Schweißprozess und die sich nach dem Schweißprozess in der Wärmeeinflusszone einstellenden Werkstoffgefüge aus. Auch diese werden durch eine mit dem erfindungsgemäßen Verfahren durchgeführte partielle Wärmebehandlung in einen duktilen Werkstoffgefügebereich überführt. Dies wirkt sich bei einem Unfall des Kraftfahrzeugs wiederum besonders vorteilig auf die Haltbarkeit der verbundenen Schweißnähte aus. Unter Schweißnähte sind im Rahmen der Erfindung alle mittels thermischen Fügens hergestellten Schweißnähte zu verstehen. Dabei kann es sich beispielsweise um durchgezogen Längsschweißnähte aber auch Punktschweißungen oder aber auch unterbrochene Schweißnähte handeln.

In einer weiteren bevorzugten Ausführungsform wird die partielle Wärmebehandlung an Aussparungen des Bauteils durchgeführt. Diese Aussparungen können beispielsweise aus gewichtsoptimierten Gründen oder aber auch aus Gründen der Durchführung von anderen Komponenten, beispielsweise eines Schalthebels oder aber auch eines Kabelbaums oder ähnlichem, in dem Bauteil vorhanden sein. Gerade im Bereich der Aussparungen und auch im Endbereich von Aussparungen kann es hierbei im Falle eines Unfalles zu Rissbildungen kommen, die sich über das gesamte Bauteil erstrecken können. Durch Reduzierung der Oberflächenspannung stellt sich in diesem Bereich ein duktiles Werkstoffgefüge ein. Dieses steht einer Rissbildung und somit auch einer erleichterten ungewollten Deformation des Bauteils entgegen.

Auch können Belastungen durch Biegewechselspannungen, die beispielsweise durch Karosserietorsion oder aber durch andere Fahreinflüsse, beispielsweise Motorschwingungen oder ähnlichem, in die Karosserie eingeleitet werden, hierdurch besonders vorteilig beeinflusst werden. Gerade in Bezug auf die Langlebigkeit einer Kraftfahrzeugkarosserie kann durch Reduzierung der Oberflächenspannung im Endbereich von Aussparungen ein besonders positiver Effekt durch ein partielles Wärmebehandeln mit dem erfindungsgemäßen Verfahren erzielt werden.

Die Kraftfahrzeugkomponente ist aus mindestens zwei Bauteilen durch Koppelung gebaut und die Wärmebehandlung wird an den Koppelungsstellen durchgeführt. Bei den mindestens zwei Bauteilen kann es sich hierbei mindestens um zwei warmgeformte und pressgehärtete Bauteile handeln. Es kann sich aber auch um nur ein warmgeformtes und pressgehärtetes Bauteil handeln, das mit einem zweiten, durch einen konventionellen Fertigungsprozess oder Blechbearbeitungsprozess hergestellten Bauteil gekoppelt wird, handeln. Hierbei ist besonders vorteilig, dass das warmgeformte und pressgehärtete Bauteil mit den gleichen positiven erfindungsgemäßen Effekten versehen wird, die bereits zuvor genannt wurden.

Weiterhin wirkt sich eine Behandlung der Koppelungsstellen mit einem erfindungsgemäßen Verfahren ebenfalls besonders vorteilig auf deren Belastbarkeit und Langlebigkeit aus. Im Bereich der Koppelung durch thermisches Fügen entsteht in einer Schweißnaht eine Wärmeeinflusszone, die wiederum eine Gefügeumwandlung mit sich bringt. Unter Berücksichtigung des hergestellten Koppelungsprozesses, beispielsweise durch Schutzgasschweißen, Laserschweißen, Punktschweißen, Rollnahtschweißen oder ähnlichem, entstehen verschiedene Werkstoffeigenschaften, die teilweise auch unerwünschte Nebeneffekte mit sich bringen. Aus wirtschaftlichen Gründen der Großserie überwiegen jedoch die Vorteile des jeweiligen eingesetzten Schweißprozesses unter Inkaufnahme der Nachteile. Diese Nachteile können jedoch mit dem erfindungsgemäßen Verfahren großserientauglich in kostengünstiger Art und Weise beseitigt werden.

Die Wärmebehandlung der Schweißnähte wirkt sich dadurch besonders vorteilig auf deren Langlebigkeit, Korrosionsbeständigkeit und Deformationsfähigkeit aus.

Vorzugsweise wird die Aufwärmung in einem Zeitraum bis zu 30 Sekunden, bevorzugt bis zu 20 Sekunden, besonders bevorzugt bis 10 Sekunden, insbesondere bis 5 Sekunden durchgeführt. Die Aufwärmung kann dabei gemäß dem erfindungsgemäßen Verfahren in einem progressiven, linearen oder degressiven Temperaturanstieg über der Zeit erfolgen. Eine kurze Aufwärmphase zum Erreichen der Aufwärmtemperatur wirkt sich in Kombination mit einer sich an diese anschließende Haltephase, in der die Aufwärmtemperatur in einer Haltezeit gehalten wird, besonders vorteilig auf die Prozesssicherheit der partiellen Wärmebehandlung aus.

Vorzugsweise liegt die Haltezeit in einem Zeitraum bis zu 30 Sekunden. Bevorzugt liegt die Haltezeit in einem Zeitraum bis zu 20 Sekunden, besonders bevorzugt bis 10 Sekunden, insbesondere bis 5 Sekunden. Durch die gezielte Werkstoffgefügeumwandlungssteuerung bei konstanter Temperatur, nur beeinflusst durch die Dauer der Haltezeit, ist der Vergütungsprozess im Rahmen der Erfindung besonders prozesssicher durchführbar. Für die Haltezeit wird dabei im Wesentlichen die erreichte Aufwärmtemperatur gehalten. Ein weiterer Temperaturanstieg oder auch Temperaturabfall während der Haltezeit ist im Rahmen der Erfindung auch vorstellbar. Dieser liegt in einem Rahmen einer Temperaturdifferenz zur Aufwärmtemperatur bis zu maximal 100 °C.

Ein weiterer sich ergebender Vorteil aus den kleinen Zeiträumen der Aufwärmung und Haltezeit ist, dass ein Wärmeübergang in Form von Wärmeleitung weitestgehend vermieden wird. Weiterhin kann das erfindungsgemäße Verfahren besonders vorteilig in die Taktzeit von bestehenden Produktionsprozessen mit Warmumformungsschritten und weiteren folgenden Fertigungsschritten integriert werden. Die Taktzeiten können dabei in einem Zeitfenster zwischen 5 Sekunden und 30 Sekunden, bevorzugt zwischen 10 Sekunden und 15 Sekunden liegen.

Die Verfahrensschritte des Aufwärmens und Haltens können dabei in einer einzigen Vorrichtung stattfinden, die auch dazu genutzt wird, das Bauteil warm umzuformen und presszuhärten. Die Bauteile können aber auch nach dem Warmumformen und Presshärten in eine separate Vorrichtung verbracht werden, in der die Aufwärmung und das Halten der Aufwärmtemperatur stattfinden. Das Aufwärmen und Halten der Temperatur selber kann beispielsweise durch induktive Erwärmung oder ähnliche Erwärmungsmöglichkeiten, die sich je nach Anwendungsfall in den Produktionsprozess einbinden lassen, durchgeführt werden.

Gemäß der vorliegenden Erfindung wird das Abkühlen in mindestens zwei Phasen durchgeführt. Im Rahmen der Erfindung können die zwei Abkühlphasen im Wesentlichen gleich lang sein. Besonders bevorzugt wird die erste Abkühlungsphase in Relation zu der zweiten Abkühlungsphase zeitlich länger andauernd durchgeführt. Die Abkühlphasen können dabei ebenfalls wiederum in einer einzigen Vorrichtung oder aber in der Vorrichtung der Wärmebehandlung oder aber in einem separaten Abkühlbehälter durchgeführt werden. Auch ist im Rahmen der Erfindung vorstellbar, die mindestens zwei verschiedenen Abkühlphasen in zwei separaten Abkühlbehältern durchzuführen.

Durch die Mehrphasigkeit des Abkühlvorgangs der erfindungsgemäßen Wärmebehandlung ist es wiederum möglich, die gewünschte Gefügeumwandlungsstufe und somit die gewünschte Werkstoffeigenschaft in den partiell wärmebehandelten Bereichen besonders prozesssicher, kosteneffizient und mit hoher Genauigkeit durchzuführen. Auch ist es möglich, durch die Mehrphasigkeit der Abkühlung den Abkühlprozess in die laufende Produktion eines herzustellenden Bauteils so einzubinden, dass er an die Taktzeiten von vorhergehenden und nachfolgenden Bearbeitungsschritten individuell in einem großen Spektrum eingestellt werden, ohne sich qualitativ nachteilig auf die erzielbaren Gefügeumwandlungen auszuwirken.

In einer bevorzugten Ausführungsvariante wird die zweite Abkühlphase in einem Zeitraum von bis zu 120 Sekunden, vorzugsweise bis zu 60 Sekunden, durchgeführt. In einer weiteren bevorzugten Ausführungsvariante wird durch die erste Phase des Abkühlens die Kraftfahrzeugkomponente auf eine Temperatur zwischen 200 °C und 900 °C, bevorzugt zwischen 300 °C und 800 °C, insbesondere zwischen 500 °C und 700 °C abgekühlt.

In einer zweiten Phase wird die Kraftfahrzeugkomponente auf eine Zieltemperatur abgekühlt. Die Zieltemperatur liegt im Rahmen der Erfindung unterhalb von 200°C. Ab einer Bauteiltemperatur von unter 200°C tritt kein thermisch verursachter Bauteilverzug mehr auf, der sich auf die Produktionssicherheit des Verfahrens negativ auswirkt. Es ist jedoch im Rahmen der Erfindung auch vorstellbar, dass die Abkühlung bis auf Raumtemperatur durchgeführt wird. Die Abkühlungsverläufe der Temperaturdifferenz bzw. der Temperaturverlauf über die Abkühlzeit kann dabei wiederum im Rahmen der Erfindung sowohl progressiv, linear, als auch degressiv verlaufen. Ein sich hieraus ergebender Vorteil besteht darin, dass nach Erreichen der ersten Abkühltemperatur im Wesentlichen kein Bauteilverzug mehr stattfindet.

In einer weiteren bevorzugten Ausführungsvariante des erfindungsgemäßen Verfahrens erfolgt die Erwärmung auf die Aufwärmtemperatur mittels Induktion und/oder Infraroterwärmung. Unter Infraroterwärmung sind im Rahmen der Erfindung beispielsweise Infrarotstrahler zu verstehen, die eine Lampenerwärmung ermöglichen. Ein sich hieraus im Zusammenhang mit dem Gesamtverfahren ergebender Vorteil ist, dass sehr kleine lokale Bereiche wärmebehandelt werden können, die einen klar definierten Grenzbereich aufweisen. Der Übergangsbereich zwischen dem warmumgeformten und pressgehärteten nicht wärmebehandelten Bereich und dem partiell wärmebehandelten Bereich beträgt mit dem erfindungsgemäßen Verfahren vorzugsweise unter 100 Millimeter, besonders bevorzugt unter 50 Millimeter und insbesondere zwischen 1 und 20 Millimeter. Hierdurch können gezielt kleine scharf berandete Bereiche lokal wärmebehandelt werden.

Weitere Vorteile, Merkmale und Eigenschaften der vorliegenden Erfindung ergeben sich aus der folgenden Beschreibung, bevorzugte Ausführungsformen anhand der schematischen Zeichnungen. Diese dienen dem einfachen Verständnis der Erfindung. Es zeigen:
- Figur 1: zeigt verschiedene Temperaturverläufe der einzelnen Schritte der Wärmebehandlung über der Zeit;
- Figur 2: eine perspektivische Ansicht einer A-Säule;
- Figur 3: eine perspektivische Ansicht eines Rahmentunnels;
- Figur 4: eine Kraftfahrzeugkomponente bestehend aus zwei miteinander gekoppelten Bauteilen;
- Figur 5: ein Instrumententräger, bestehend aus mehreren Bauteilen und
- Figur 6: einen Stoßfänger mit verschiedenen Anbauteilen.

In den Figuren werden für gleiche oder ähnliche Teile dieselben Bezugszeichen verwendet, wobei entsprechende oder vergleichbare Vorteile erreicht werden, auch wenn eine wiederholte Beschreibung aus Vereinfachungsgründen entfällt.

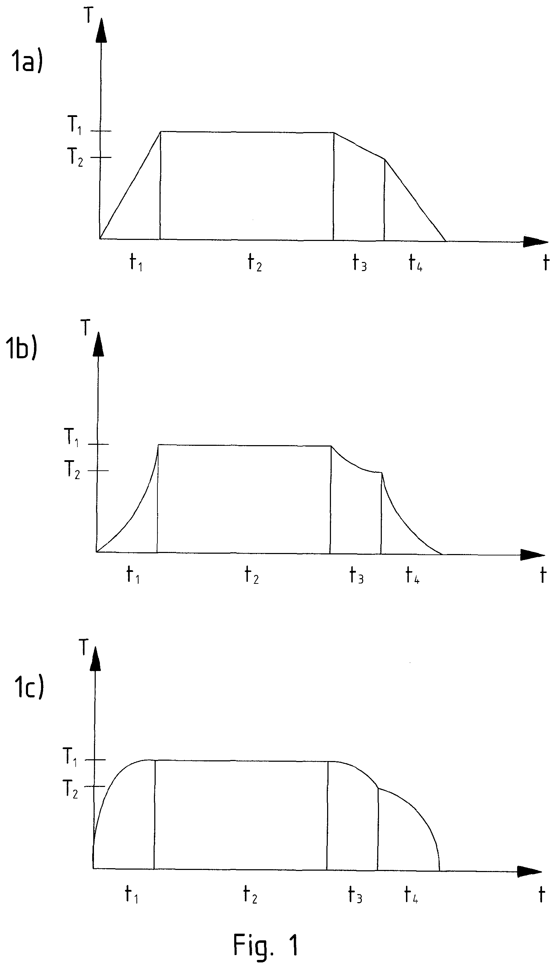

Figur 1a zeigt eine Temperaturverlauf über der Zeit mit den erfindungsgemäßen Zeitabschnitten Aufwärmzeit (t1), Haltezeit (t2), Abkühlzeit erste Phase (t3) und Abkühlzeit zweite Phase (t4). Weiter sind auf der Achse der Temperatur die Aufwärmtemperatur (T1) sowie eine erste Abkühltemperatur (T2) gezeigt.

Beginnend von einer warmumgeformten und pressgehärteten Kraftfahrzeugkomponente, die sich im Wesentlichen auf einer Temperatur unter 200°C befindet, wird diese in der Aufwärmzeit auf die Aufwärmtemperatur (T1) erwärmt. Bei einer Ausgangstemperatur von unter 200°C, jedoch über Raumtemperatur wird im Rahmen der Erfindung die Restwärmeenergie des Warmumform- und Presshärteprozesses für die partielle Wärmebehandlung genutzt.

Die Erwärmung weist einen linearen Temperaturanstieg über die Zeit auf. Nach Abschluss der Aufwärmzeit (t1) wird die Aufwärmtemperatur (T1) für eine Haltezeit (t2) gehalten. Die Aufwärmtemperatur (T1) wird über die gesamte Haltezeit (t2) im Wesentlichen konstant gehalten. Temperaturschwankungen in Form eines Temperaturanstiegs oder Temperaturabfalls sind hier nicht dargestellt, können jedoch im Rahmen der Erfindung während der Haltezeit (t2) aus Gründen der gewünschten Werkstoffgefügeumwandlung oder aber auch aus Kostengründen des Produktionsprozesses stattfinden.

Nach Abschluss der Haltezeit (t2) findet eine erste Abkühlung auf eine Abkühltemperatur (T2) statt. Der Temperaturverlauf fällt dabei linear über die Abkühlzeit der ersten Phase (t3) ab auf die Abkühltemperatur (T2). Die Abkühltemperatur (T2) kann dabei in einem Bereich zwischen 100°C und einer Aufwärmtemperatur (T1) liegen.

In einer daran anfolgenden zweiten Abkühlphase findet eine weitere lineare Temperaturabnahme in der Abkühlzeit der zweiten Phase (t4) statt. Die Temperaturabnahme kann dabei im Wesentlichen auf Raumtemperatur oder aber eine gewünschte, hier nicht näher dargestellte, Zieltemperatur stattfinden. Auch ist es im Rahmen der Erfindung vorstellbar, dass weitere Abkühlphasen, die hier nicht näher dargestellt sind, stattfinden.

Figur 1b zeigt eine im Wesentlichen zeitlich ähnliche Staffelung der Wärmebehandlung mit dem Unterscheid zu Figur 1a, dass der Temperaturanstieg während der Aufwärmzeit (t1) einen progressiven Verlauf aufweist und die Abkühlung während der ersten und der zweiten Phase einen jeweils degressiven Temperaturverlauf über der Zeit (t3, t4) besitzt.

Figur 1 c zeigt ergänzend zu Figur 1a und 1b, dass der Temperaturverlauf während der Aufwärmzeit (t1) einen degressiven Verlauf aufweist und während der einzelnen Abkühlphasen einen jeweils progressiven Verlauf der Temperaturabnahme über der Zeit (t3, t4) besitzt.

Im Rahmen der Erfindung ist es auch vorstellbar, den Temperaturverlauf über der Zeit in Mischformen von progressivem, linearem und degressivem Verlauf zu kombinieren und auch eine Temperaturänderung mit progressiven, degressiven oder linearen Verlauf während der Haltezeit (t2) zu realisieren.

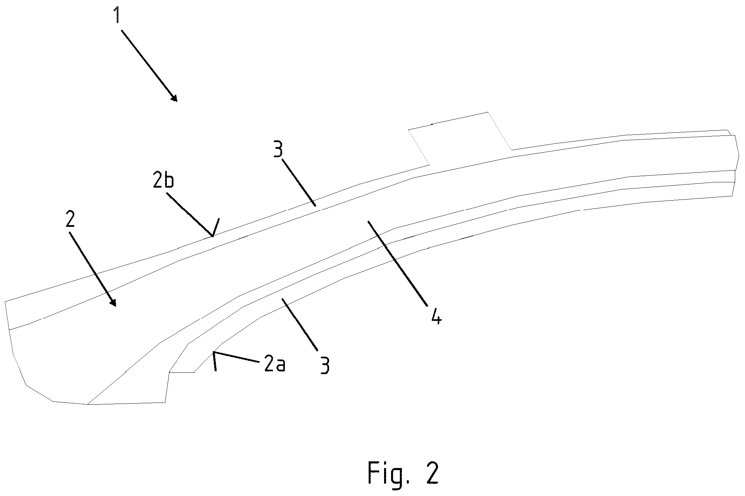

Figur 2 zeigt eine Kraftfahrzeugkomponente 1 in Form einer A-Säule 2 einer hier nicht näher dargestellten Kraftfahrzeugkarosserie. Die A-Säule 2 weist an ihren jeweiligen Seiten 2a, 2b Fügeflansche 3 auf, die mit dem erfindungsgemäßen Verfahren wärmebehandelt sind. Die A-Säule 2 hat demnach durch ihren mittleren Profilteil 4 eine hohe Festigkeit und Härte, die im Crashfall den Schutz eines Fahrgastraumes garantiert und in ihren Fügeflanschen 3 gegenüber dem mittleren Profilteil eine eher duktile Werkstoffeigenschaft, so dass an den Fügeflanschen 3 angebundene Komponenten, die hier nicht näher dargestellt sind, mit der A-Säule 2 verbunden bleiben und kein Abreißen in den Verbindungsstellen, gekennzeichnet durch die Fügeflansche 3, geschieht.

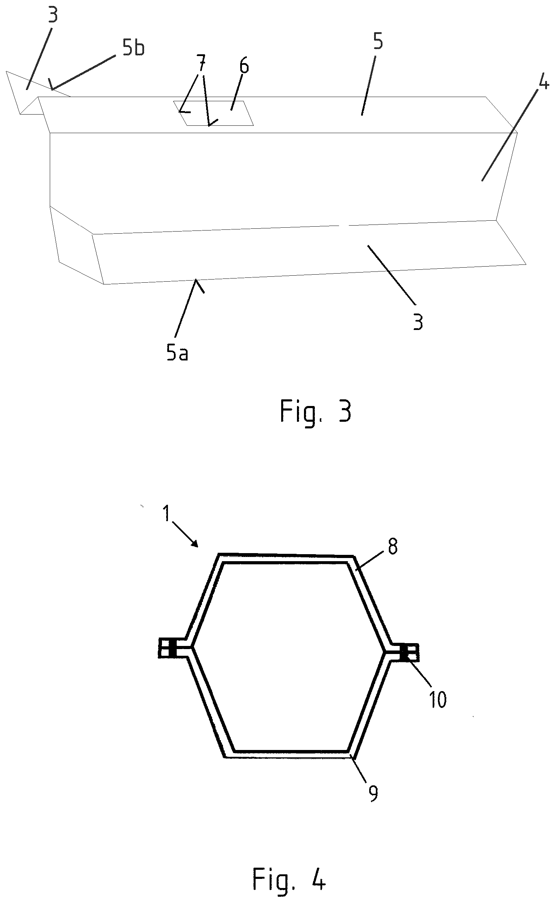

Figur 3 zeigt eine Kraftfahrzeugkomponente 1 in Form eines Getriebetunnels 5, welcher nicht eine gebaute Kraftfahrzeugkomponente gemäß Anspruch 1 darstellt. Der Getriebetunnel 5 weist eine Aussparung 6 auf sowie an beiden Seiten 5a, 5b Fügeflansche 3 und einen mittleren Profilteil 4. Auch hier können die Endbereiche 7 der Aussparung 6 sowie die Fügeflansche 3 mit dem Verfahren wärmebehandelt sein. Im Falle eines Fahrzeugcrashes wird durch die Wärmebehandlung der Endbereiche 7 der Aussparung 6 eine Rissbildung gezielt vermieden, die sich negativ auf das Deformationsverhalten der Kraftfahrzeugkomponente 1, hier in Form des Getriebetunnels 5, auswirken würde.

Figur 4 zeigt eine Kraftfahrzeugkomponente 1, die aus zwei gekoppelten Bauteilen 8, 9 gebaut wurde. In der hier dargestellten Ausführungsvariante ist ein auf die Bildebene bezogenes oberes Bauteil 8, ein warmumgeformtes und pressgehärtetes Bauteil und ein auf die Bildebene bezogenes unteres Bauteil 9, ein mit herkömmlichen Umformverfahren hergestelltes Bauteil. Die zwei Bauteile 8, 9 sind in Koppelungsstellen 10 miteinander gekoppelt. Die Koppelungsstellen 10 wurden nach dem Koppelungsprozess mit einem erfindungsgemäßen Verfahren wärmebehandelt.

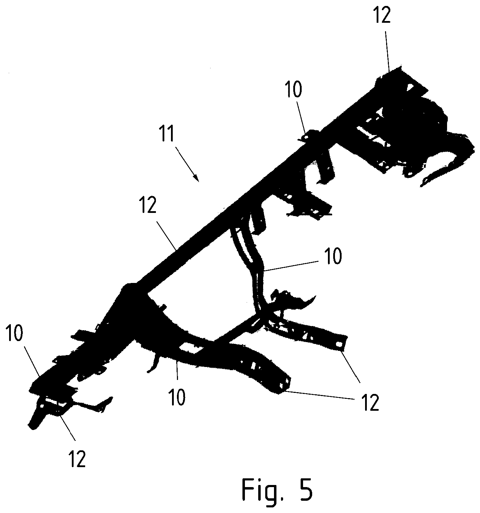

Figur 5 zeigt einen Instrumententräger 11, der aus mehreren Einzelbauteilen 12 zusammengebaut ist. Die Einzelbauteile 12 sind dabei über Koppelungsstellen 10 miteinander gekoppelt.

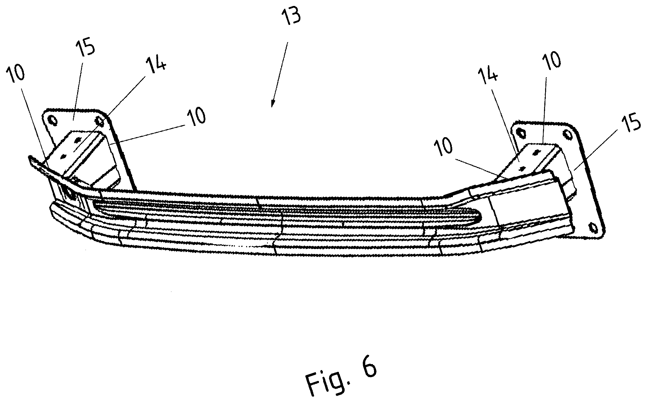

Figur 6 zeigt einen Stoßfänger 13 mit zwei Crashboxen 14 und an die Crashboxen gekoppelte Halteplatten 15. Der Stoßfänger 13 ist durch thermisches Fügen mit den Crashboxen 14 an Koppelungsstellen 10 gekoppelt.

### Bezugszeichen:

- 1 -: Kraftfahrzeugkomponente
- 2 -: A-Säule
- 2a -: Seite zu 2
- 2b -: Seite zu 2
- 3 -: Fügeflansch
- 4 -: mittlerer Profilteil
- 5 -: Getriebetunnel
- 5a -: Seite zu 5
- 5b -: Seite zu 5
- 6 -: Aussparung
- 7 -: Endbereich
- 8 -: oberes Bauteil
- 9 -: unteres Bauteil
- 10 -: Koppelungsstelle
- 11 -: Instrumententräger
- 12 -: Einzelbauteil
- 13 -: Stoßfänger
- 14 -: Crashbox
- 15 -: Halteplatte

- t1 -: Aufwärmzeit
- t2 -: Haltezeit
- t3 -: Abkühlzeit erste Phase
- t4 -: Abkühlzeit zweite Phase
- T1 -: Aufwärmtemperatur
- T2 -: Abkühltemperatur erste Phase

## Patentansprüche

1. Verfahren zur Herstellung einer Kraftfahrzeugkomponente (1) mit mindestens einem warmgeformten und pressgehärteten Karosseriebauteil (8, 9) aus hochfestem Stahl, wobei die Kraftfahrzeugkomponente (1) als Strukturbauteil und/oder Sicherheitsbauteil für ein Kraftfahrzeug eingesetzt wird, mit folgenden Verfahrensschritten:
- Partielles Wärmebehandeln des Karosseriebauteils in Bereichen, wobei die Bereiche zunächst auf eine Aufwärmtemperatur (T1) in einem Temperaturbereich zwischen 500°C und 900°C, bevorzugt zwischen 550°C und 800°C, insbesondere zwischen 700°C und 800°C aufgewärmt werden;
- Halten der Aufwärmtemperatur (T1) für eine Haltezeit (t2);
- Abkühlen von der Aufwärmtemperatur (T1) in mindestens zwei Phasen,wobei die Kraftfahrzeugkomponente (1) aus Karosseriebauteilen (8, 9) durch Koppelung gebaut ist und die Wärmebehandlung an den Koppelungsstellen (10) durchgeführt ist.

2. Verfahren nach Anspruch 1, **dadurch gekennzeichnet, dass** die Koppelung durch thermisches Fügen hergestellt ist.

3. Verfahren nach einem der Ansprüche 1 bis 2, **dadurch gekennzeichnet, dass** die Aufwärmung in einem Zeitraum (t1) bis 30 Sekunden, vorzugsweise bis 20 Sekunden, besonders bevorzugt bis 10 Sekunden, insbesondere bis 5 Sekunden durchgeführt ist.

4. Verfahren nach einem der Ansprüche 1 bis 3, **dadurch gekennzeichnet, dass** die Haltezeit (t2) in einem Zeitraum bis 30 Sekunden, vorzugsweise bis 20 Sekunden, besonders bevorzugt bis 10 Sekunden, insbesondere bis 5 Sekunden durchgeführt ist.

5. Verfahren nach einem der Ansprüche 1 bis 4, **dadurch gekennzeichnet, dass** die Abkühlzeit der ersten Phase (t3) in Relation zu der Abkühlzeit der zweiten Phase (t4) länger andauernd durchgeführt ist.

6. Verfahren nach Anspruch 5, **dadurch gekennzeichnet, dass** die zweite Phase in einem Zeitraum (t4) bis zu 120 Sekunden, vorzugsweise bis zu 60 Sekunden durchgeführt ist.

7. Verfahren nach einem der Ansprüche 1 bis 6, **dadurch gekennzeichnet, dass** das Karosseriebauteil (8, 9) durch die erste Phase des Abkühlens (t3) auf eine Temperatur (T2) zwischen 200°C und 900°C, bevorzugt zwischen 300°C und 800°C, insbesondere zwischen 500°C und 700°C abgekühlt ist.

8. Verfahren nach einem der Ansprüche 1 bis 7, **dadurch gekennzeichnet, dass** die Kraftfahrzeugkomponente als A-Säule, B-Säule, C-Säule, D-Säule, Bumper, Crashbox, Längsträger vorne, Längsträger hinten, Tunnel, beispielsweise in Form eines Getriebetunnels, Schweller, Querträger, Sitzquerträger, Fersenblech, Dachquerträger, Bodenblech, Seitenwand, Fahrzeugtür, Heckklappe, Motorhaube, Dachbereich oder Instrumententafelträger ausgebildet ist, wobei Fügeflansche und/oder Koppelungsstellen und/oder crashrelevante Bauteilbereich partiell in mehreren Schritten wärmebehandelt sind.

9. Verfahren nach einem der Ansprüche 1 bis 8, **dadurch gekennzeichnet, dass** die Kraftfahrzeugkomponente ein bauteilspezifisch definiertes Verformungsverhalten durch Faltenbildung aufweist, wobei Fügeflansche und/oder crashrelevante Bauteilbereich partiell in mehreren Schritten wärmebehandelt sind.

## Claims

1. Method for producing a motor vehicle component (1) having at least one hot-formed and press-hardened body part (8, 9) made from high-strength steel, wherein the motor vehicle component (1) is used as a structural part and/or safety part for a motor vehicle, with the following method steps:
- partially heat-treating the body part in zones, wherein the zones are first heated to a heat-up temperature (T1) in a temperature range between 500°C and 900°C, preferably between 550°C and 800°C, particularly between 700°C and 800°C;
- maintaining the heat-up temperature (T1) for a holding time (t2);
- cooling down from the heat-up temperature (T1) in at least two phases, wherein the motor vehicle component (1) is constructed from body parts (8, 9) by coupling and the heat treatment is carried out at the coupling sites (10).

2. The method according to claim 1, **characterised in that** the coupling is produced by thermal joining.

3. The method according to any one of claims 1 to 2, **characterised in that** the heating up is carried out over a period (t1) of up to 30 seconds, preferably up to 20 seconds, most preferably up to 10 seconds, particularly up to 5 seconds.

4. The method according to any one of claims 1 to 3, **characterised in that** the holding time (t2) is carried out over a period of up to 30 seconds, preferably up to 20 seconds, most preferably up to 10 seconds, particularly up to 5 seconds.

5. The method according to any one of claims 1 to 4, **characterised in that** the cooling time of the first phase (t3) is carried out for a longer duration in relation to the cooling time of the second phase (t4).

6. The method according to claim 5, **characterised in that** the second phase is carried out over a period (t4) of up to 120 seconds, preferably up to 60 seconds.

7. The method according to any one of claims 1 to 6, **characterised in that** the body part (8, 9) is cooled by the first phase of the cooling (t3) to a temperature (T2) of between 200°C and 900°C, preferably between 300°C and 800°C, particularly between 500°C and 700°C.

8. The method according to any one of claims 1 to 7, **characterised in that** the motor vehicle component is formed as an A-pillar, B-pillar, C-pillar, D-pillar, bumper, crash box, front longitudinal member, rear longitudinal member, tunnel, for example in the form of a transmission tunnel, sill, cross member, seat cross member, heel panel, roof cross member, floor panel, side panel, vehicle door, tailgate, engine bonnet, roof area or instrument panel support, wherein joining flanges and/or coupling sites and/or crash-relevant part zones are partially heat-treated in several steps.

9. The method according to any one of claims 1 to 8, **characterised in that** the motor vehicle component has a part-specific defined deformation behaviour due to crinkling, wherein joining flanges and/or crash-relevant part zones are partially heat-treated in several steps.

## Revendications

1. Procédé de fabrication d'un élément (1) de véhicule automobile avec au moins une pièce de carrosserie (8, 9) formée à chaud et durcie sous presse en acier à haute résistance, dans lequel l'élément (1) de véhicule automobile est utilisé comme pièce de structure et/ou pièce de sécurité pour un véhicule à moteur, avec les étapes de procédé suivantes :
- traitement thermique partiel de la pièce de carrosserie dans des zones, dans lequel les zones sont d'abord chauffées à une température de chauffage (T1) dans une plage de températures comprise entre 500 °C et 900 °C, de préférence entre 550 °C et 800 °C, en particulier entre 700 °C et 800 °C ;
- maintien de la température de chauffage (T1) pendant un temps de maintien (t2) ;
- refroidissement à partir de la température de chauffage (T1) en au moins deux phases, dans lequel l'élément (1) de véhicule automobile est constitué de pièces de carrosserie (8, 9) par liaison et le traitement thermique est effectué au niveau des points de liaison (10).

2. Procédé selon la revendication 1, **caractérisé en ce que** la liaison est obtenue par assemblage thermique.

3. Procédé selon l'une quelconque des revendications 1 à 2, **caractérisé en ce que** le chauffage est effectué dans un intervalle de temps (t1) allant jusqu'à 30 secondes, de préférence jusqu'à 20 secondes, plus préférentiellement jusqu'à 10 secondes, en particulier jusqu'à 5 secondes.

4. Procédé selon l'une quelconque des revendications 1 à 3, **caractérisé en ce que** le temps de maintien (t2) est effectué sur un intervalle de temps allant jusqu'à 30 secondes, de préférence jusqu'à 20 secondes, plus préférentiellement jusqu'à 10 secondes, en particulier jusqu'à 5 secondes.

5. Procédé selon l'une quelconque des revendications 1 à 4, **caractérisé en ce que** le temps de refroidissement de la première phase (t3) est effectué de manière plus longue par rapport au temps de refroidissement de la deuxième phase (t4).

6. Procédé selon la revendication 5, **caractérisé en ce que** la deuxième phase est effectuée dans un intervalle de temps (t4) allant jusqu'à 120 secondes, de préférence jusqu'à 60 secondes.

7. Procédé selon l'une quelconque des revendications 1 à 6, **caractérisé en ce que** la pièce de carrosserie (8, 9) est refroidie par la première phase de refroidissement (t3) à une température (T2) comprise entre 200 °C et 900 °C, de préférence entre 300 °C et 800 °C, en particulier entre 500 °C et 700 °C.

8. Procédé selon l'une quelconque des revendications 1 à 7, **caractérisé en ce que** l'élément de véhicule à moteur est réalisé en tant que montant A, montant B, montant C, montant D, pare-chocs, caisson anticollision, longeron avant, longeron arrière, tunnel, par exemple en forme de tunnel de boîte de vitesses, bas de caisse, traverse, traverse de siège, plaque de talon, traverse de toit, tôle de plancher, paroi latérale, portière du véhicule, hayon, capot moteur, zone du toit ou support du tableau de bord, dans lequel des brides d'assemblage et/ou points de liaison et/ou une zone de pièce concernée par la collision sont partiellement traités thermiquement en plusieurs étapes.

9. Procédé selon l'une quelconque des revendications 1 à 8, **caractérisé en ce que** l'élément de véhicule automobile présente un comportement de déformation défini spécifiquement pour la pièce par formation de plis, dans lequel des brides d'assemblage et/ou une zone de pièce concernée par la collision sont partiellement traitées thermiquement en plusieurs étapes.
